# EUROPÄISCHE PATENTSCHRIFT

(11) **EP 0 519 319 B1**
(45) Veröffentlichungstag und Bekanntmachung des Hinweises auf die Patenterteilung: **15.10.1997**
(21) Anmeldenummer: 92109807.5
(22) Anmeldetag: 11.06.1992
(51) Int. Cl.: H05B 7/00, H05B 7/144

(54) **Verfahren zum Betrieb eines Gleichstrom-Lichtbogenofens**
Method of operating a direct current arc furnace
Méthode d'emploi d'un four à arc à courant continu

(30) Priorität: 20.06.1991 CH 1827/91
(43) Veröffentlichungstag der Anmeldung: 23.12.1992
(73) Patentinhaber: ASEA BROWN BOVERI AG, 5400 Baden (CH)
(72) Erfinder: Stenkvist, Sven-Einar, CH-5200 Brugg (CH)

(56) Entgegenhaltungen:
- EP-A- 0 456 085
- DE-A- 4 035 233
- DE-B- 1 053 690
- FR-A- 593 283
- FR-A- 1 422 830
- GB-A- 939 521
- US-A- 2 727 936
- US-A- 3 683 094
- US-A- 4 495 625
- PATENT ABSTRACTS OF JAPAN vol. 13, no. 338 (E-795)28. Juli 1989

## Beschreibung

Die Erfindung bezieht sich auf ein Verfahren zum Betrieb eines Gleichstrom-Lichtbogenofens mit mindestens einer als Kathode geschalteten Elektrode und mindestens einer als Anode geschalteten Bodenelektrode.

Die Erfindung nimmt dabei Bezug auf einen Stand der Technik, wie er sich beispielsweise aus der US-PS 4,032,704 ergibt.

### TECHNOLOGISCHER HINTERGRUND UND STAND DER TECHNIK

Bei Gleichstrom-Lichtbogenöfen ist die Bodenelektrode das am höchsten beanspruchte Bauteil. Sie besteht beispielsweise aus einem oder mehreren Stahlkörpern, der sich durch den Gefässboden und seine Ausmauerung erstreckt und im Ofeninneren den elektrischen Kontakt zur Schmelze herstellt. Ausserhalb des Gefässbodens ist die Bodenelektrode an die Stromversorgung des Ofens angeschlossen. Bei modernen Gleichstromlichtbogenöfen bildet der gesamte Ofenboden die Bodenelektrode, die entweder als elektrisch leitende Futterschicht mit elektrisch leitenden Ziegeln oder nichtleitender Zustellung mit eingestreuten Metallstäben oder Metallblechen ausgeführt ist.

Der durch die Schmelze fliessende Ofenstrom führt zu einer Badbewegung in der Schmelze. Diese Badbewegung - hat eine günstige Auswirkung auf den Schmelzverlauf und auf den Temperaturausgleich im Schmelzbad. Bei leistungsstarken Lichtbogenöfen, die mit Gleichströmen bis 120 kA und mehr betrieben werden, besteht jedoch die Gefahr, dass die Strömung in der Schmelze - dabei treten Geschwindigkeiten bis zu 0,5 m/sec auf - den Verschleiss des Ofenbodens im Bereich unter der Elektrode infolge Erosion erhöht. Insbesondere bei Gleichstrom-Lichtbogenöfen mit grossflächiger Bodenelektrode (Bodenkontakt) verkürzen diese Vorgänge die Standzeit des Ofengefässes.

Beim dem Gleichstrom-Lichtbogenofen nach der FR-A-593 283 tritt das Magnetfeld einer stromdurchflossenen Spule in Wechselwirkung mit dem Lichtbogen oberhalb der Schmelze und soll diesen zu einer Drehbewegung veranlassen. Auf diese Weise soll die Schmelze gleichmässig erwärmt, der Wärmeübergang vom Lichtbogen zum Metall und die Stabilität des Lichtbogens verbessert werden.

### KURZE DARSTELLUNG DER ERFINDUNG

Ausgehend vom Stand der Technik liegt der Erfindung die Aufgabe zugrunde, ein Verfahren zum Betrieb eines Gleichstrom-Lichtbogenofens zu schaffen, das die Erosion der Bodenelektrode vermindert und damit deren Lebensdauer verlängert.

Diese Aufgabe wird erfindungsgemäss dadurch gelöst, dass die Schmelze mit einem Magnetfeld beaufschlagt wird, das von einer unterhalb des Ofenboden angeordneten gleichstromdurchflossenen, vorzugswiese vom Ofenstrom durchflossenen Spule erzeugt wird, deren Spulenfläche annähernd der Fläche der Bodenelektrode entspricht, wobei die Amperewindungszahl so bemessen ist, dass die durch den Stromfluss in der Schmelze unterhalb der Elektrode allein erzeugte, nach unten gerichtete Badbewegung in der Schmelze durch das Magnetfeld der besagten Spule im bodennahen Bereich unterhalb der Elektrode in die Gegenrichtung gekehrt wird.

Zwar ist bereits in der US-A-4,032,704 vorgeschlagen worden, einen mit Gleichstrom gespeisten Elektromagneten an der Unterseite des Ofengefässes eines Gleichstromlichtbogens vorzusehen. Dieser Elektromagnet dient jedoch ausdrücklich dazu, in der Schmelze eine zusätzliche Rührbewegung zu erzeugen, um metallurgische Reaktionen und einen Temperaturausgleich in die Schmelze zu beschleunigen. Hinweise über die Bemessung des Magneten und seine nachstehend nicht ohne weiteres vorhersehbaren Wirkungen auf die Badbewegung der Schmelze und die Standzeit des Ofengefässes sind dieser Patentschrift nicht zu entnehmen.

Bei der Erfindung erzeugt die Spule ein stationäres Magnetfeld. Durch Einwirkung des Magnetfeldes auf den Strom in der Schmelze werden Kräfte erzeugt, wodurch die Schmelze in Rotation um die Vertikalachse des Ofens versetzt wird. Durch diese Rotation entsteht eine sekündäre Einwirkung des Magnetfeldes, wodurch zusätzliche Kräfte im Schmelzbad erzeugt werden, die der Strömung der Schmelze von der Lichtbogenzone zum Ofenboden entgegenwirken. Nach wie vor findet jedoch in der Schmelze eine Badbewegung statt, die den Wärmeaustausch vorteilhaft beeinflusst.

Die Spule lässt sich ohne grossen Aufwand sowohl bei Neukonstruktionen als auch bei bestehenden Oefen in die Ofenanlage integrieren. Ihr zusätzlicher Leistungsbedarf ist gegenüber dem Leistungsbedarf des gesamten Ofens klein und liegt bei etwa 0,3% der gesamten Ofenleistung. Die Spule kann grundsätzlich von einer externen Stromquelle gespiest werden. Es ist jedoch am wirtschaftlichsten, wenn sie in den Ofenstromkreis integriert ist und vom Ofenstrom durchflossen wird. Dann erfüllt sie vorteilhaft einen weiteren Zweck: Bei Gleichstrom-Lichtbogenofenanlagen werden normalerweise in den Speiseinrichtungen Gleichstromdrosseln eingesetzt, damit die gesamte Ofenregelung funktioniert. So werden z.B.in einem 12-Puls-Gleichrichter zwei Drosseln verlangt mit je fünf Windungen, die typisch von etwa 40 kA durchflossen werden. Vorteilhaft können nun die Spulenanordnungen an der Unterseite des Ofengefässes als ebendiese Drosseln verwendet werden, was beispielsweise durch Unterteilung der einen Spule in zwei magnetisch parallelgeschaltete Spulen erfolgen kann.

Die Erfindung wird nachstehend anhand eines in der Zeichnung dargestellten Ausführungsbeispiels näher erläutert.

### KURZE BESCHREIBUNG DER ZEICHNUNGEN

In der Zeichnung zeigt
- Fig.1: ein Ausführungsbeispiel eines Gleichstrom-Lichtbogenofens mit einer vom Ofenstrom durchflossenen Magnetspule unterhalb des Gefässbodens;
- Fig.2: eine Schaltungsanordnung mit einem 12-pulsigen Gleichrichter, bei welcher die Elektromagneten in die Ofenspeisung integriert sind;
- Fig.3: eine graphische Dastellung der sich in einem Gleichstrom-Lichtbogenofen einstellenden Strömungen in der Schmelze ohne äusseres Magnetfeld;
- Fig.4: eine graphische Dastellung der sich im erfindungsgemässen Gleichstrom-Lichtbogenofen mit unter dem Gefäss angeordneter Magnetspule einstellenden Strömungen in der Schmelze.

### DETAILLIERTE BESCHREIBUNG DER ERFINDUNG

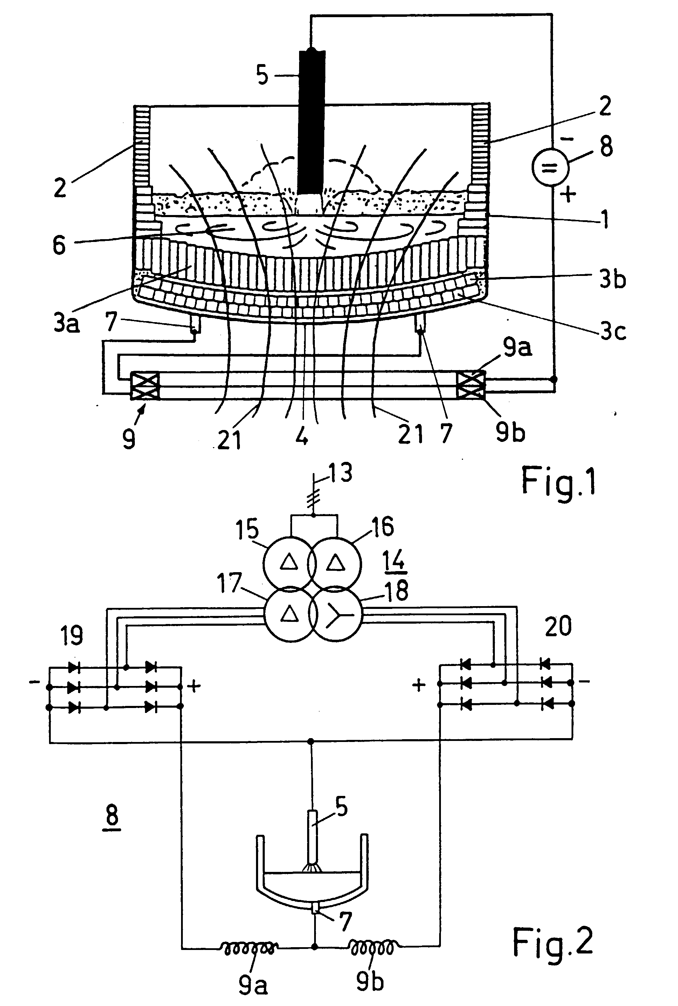

Der Kesselunterteil eines Gleichstrom-Lichtbogenofens gemäss Fig.1 weist einen metallischen Gefässmantel 1 auf, dessen Wandungen mit einer Feuerfest-Ausmauerung 2 versehen sind. Der gesamte Boden des Ofengefässes ist als Bodenelektrode 3 ausgebildet und besteht aus mehreren Schichten elektrisch leitender Ziegel 3a, 3b, 3c aus Feuerfestmaterial, dem zwecks Erhöhung der Leitfähigkeit Kohlenstoff zugesetzt ist. Die Ziegel liegen auf einer Bodenplatte 4 auf, welche gleichzeitig der Kontaktierung der Bodenelektrode 3 dient. Eine Lichtbogenelektrode 5 ragt von oben her in das Ofengefäss bis wenig oberhalb der Schmelze 6. Im Ausführungsbeispiel weist der Ofen nur eine als Kathode geschaltete Elektrode 5 auf, doch kann diese Zahl auch zwei, drei oder mehr betragen. Die Bodenelektrode 3 ist mit Stromanschlüssen 7 versehen, die an den positiven Pol einer Stromversorgungseinrichtung 8 führen.
Insoweit entspricht der Gleichstrom-Lichtbogenofen dem Stand der Technik und ist beispielsweise im US-Patent 4,228,314 oder auch in der DE-Patentschrift 30 22 566 ausführlich beschrieben.

Erfindungsgemäss ist nun an der Unterseite des Ofengefässes eine Magnetspule 9, bestehend im Beispielsfall aus zwei magnetisch parallelgeschalteten Einzelspulen 9a und 9b, vorgesehen.Diese Magnetspule 9 ist vom Gefässboden deutlich distanziert und weist eine Fläche auf, die in der Grössenordnung der freien Schmelzbadoberfläche der Schmelze 6 liegt.

Bei einem typischen 80 Tonnen-Gleichstrom-Lichtbogenofen mit ca 5,5 m Ofendurchmesser bei ca. 4,5 m Innendurchmesser beträgt der Durchmesser der Magnetspule ca 2 m. Der Abstand von der Schmelze etwa 1,3 m.
Jede der beiden Einzelspulen 9a und 9b wird, wie aus Fig.2 hervorgeht, vom halben Ofenstrom durchflossen. Es kann aber auch nur eine einzige vom gesamten Ofenstrom durchflossene Spule sein.

Die Schaltungsanordnung nach Fig.2 zeigt eine typische Stromversorgungseinrichtung eines modernen GleichstromLichtbogenofens mit einer 12-pulsigen Gleichrichteranordnung. An ein dreiphasiges Drehstromnetz 13 ist ein Transformator 14 mit zwei Primärwicklungen 15, 16, die im Dreieck geschaltet sind, und zwei Sekundärwicklungen 17, 18, von denen die eine im Dreieck, die andere in Stern geschaltet ist, angeschlossen. Beide Sekundärwicklungen führen an eine dreiphasige Gleichrichter-Brückenschaltung 19 bzw. 20. Die Minus-Sammelschienen sind miteinander verbunden und an die Schnelzelektrode 5 geführt. Zwischen jeder Plus-Sammelschiene der Brückenschaltungen 19 und 20 und der Bodenelektrode 2 liegt eine Teilspule 9a bzw. 9b. Erfindungsgemäss bilden nun diese beiden Teilspulen den hier aus zwei Spulen bestehenden Elektromagneten, wobei selbstredend die Anschlüsse und Windungssinn der Spulen so getroffen sind, dass diese Teilmagneten magnetisch parallel geschaltet sind. Bei einer sechs-pulsigen Gleichrichterschaltung entfielen die Wicklungen 15, 17 oder 16, 18 des Transformators 14 und dementsprechend eine der Brücken 19 bzw. 20 und auch eine der Teilspulen 9a bzw. 9b.

Bei einer Stromdichte von beispielsweise 5A/mm² beträgt das Gewicht des Elektromagneten etwa 4000 kg und die elektrischen Verluste liegen etwa bei 200 kW, ein akzeptabler Wert, wenn man bedenkt, dass der Leistungsbedarf eines derartigen Gleichstrom-Lichtbogenofen bei rund 65 MVA liegt; damit erhöht sich der Leistungsbedarf der gesamten Anlage nur um etwa 0,3 %.

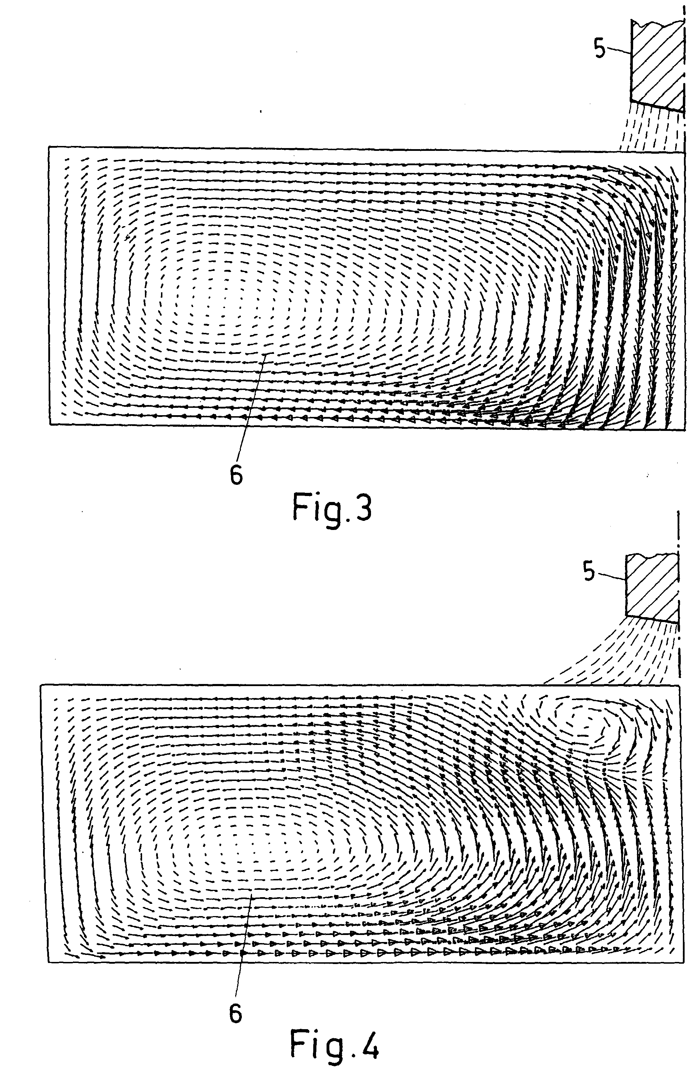

Bei Betrieb des Ofens ohne Magnetspule 9 stellt sich in der Schmelze eine Badbewegung ein, die in der Fig.3 in Gestalt eines Geschwindigkeitsprofils (für die eine Hälfte des Bades) dargestellt ist. Je länger die Pfeile sind, je höher ist dabei jeweils die lokale Strömungsgeschwindigkeit. Man erkennt deutlich, dass im Bereich unterhalb der Elektrode die Schmelze mit hoher Geschwindigkeit von der Oberfläche zum Bodenkontakt strömt. Dabei werden Geschwindigkeiten um 0,5 m/sec. erreicht. Diese hohen Geschwindigkeiten in Verbindung mit der Temperatur der Schmelze führen zu Erosionen des Bodenkontakts.

Mit einer geeignet dimensionierten Magnetspule 9 hingegen - das von ihr ausgehende Feld ist in Fig.1 durch die Feldlinien 21 symbolisiert - überlagern sich die vom Ofenstrom in der Schmelze auftretenden Kraftwirkungen mit derjenigen des äusseren Magnetfeld derart, dass in der Schmelze im Bereich unter der Elektrode 5 eine Richtungsumkehr zumindest im bodennahen Bereich stattfindet, wie es in Fig.4 deutlich zu erkennen ist. Dabei ist auch die Strömungsgeschwindigkeit im bodennahen Bereich kleiner, und - was für die Lebensdauer des Bodenkontakts wesentlich ist - im kritischen Bereich unterhalb der Elektrode 5 trifft der Schmelzenstrom nicht mehr senkrecht oder nahezu senkrecht auf den Boden auf. Dass nunmehr die Schmelze am Gefässrand auf den Bodenkontakt auftrifft, ist weniger kritisch, weil dort mit geringerer Geschwindigkeit und mit einer weniger hohen Temperatur.

Nach wie vor strömt im oberflächennahen Bereich die Schmelze unter der Elektrode 5 von oben nach unten. Es stellt sich jedoch eine Uebergangszone ein, in welcher die beiden aufeinander zufliessenden Ströme sich radial nach aussen wenden. Die Tiefe, in der diese beiden Ströme aufeinanderprallen, ist sowohl durch die Höhe des Ofenstroms und die Grösse des äusseren Magnetfeldes bestimmt. Dabei haben sich folgende Richtwerte ergeben:

Bei einer Amperewindungszahl, die um die Faktor 2 oder mehr höher ist als der Ofenstrom, findet zumindest im bodennahen Bereich die geschilderte Richtungsumkehr statt.

## Patentansprüche

1. Verfahren zum Betrieb eines Gleichstrom-Lichtbogenofens mit mindestens einer als Kathode geschalteten Elektrode (5) und mindestens einer als Anode geschalteten Bodenelektrode (3), dadurch gekennzeichnet, dass die Schmelze mit einem Magnetfeld beaufschlagt wird, das von einer unterhalb des Ofenbodens (4) angeordneten gleichstromdurchflossenen, vorzugsweise vom Ofenstrom durchflossenen Spule (9a,9b) erzeugt wird, deren Spulenfläche annähernd der Fläche der Bodenelektrode entspricht, wobei die Ampere-Windungszahl so bemessen ist, dass die durch den Stromfluss in der Schmelze (6) unterhalb der Elektrode (5) allein erzeugte, nach unten gerichtete Badbewegung in der Schmelze (6) durch das Magnetfeld der besagten Spule (9a,9b) im bodennahen Bereich unterhalb der Elektrode (5) in die Gegenrichtung gekehrt wird.

2. Verfahren nach Anspruch 1, dadurch gekennzeichnet, dass die Spule (9a,9b) so bemessen ist, dass die Ampere-windungszahl mindestens das Zweifache des Ofenstroms beträgt.

3. Verfahren nach Anspruch 1 oder 2, dadurch gekennzeichnet, dass das Magnetfeld durch zwei magnetisch parallelgeschaltete Einzelspulen (9a,9b) erzeugt wird, die jeweils vom halben Ofenstrom durchflossen sind.

## Claims

1. Method of operating a direct-current arc furnace having at least one electrode (5) connected as cathode and at least one bottom electrode (3) connected as anode, characterized in that the melt is acted upon by a magnetic field which is generated by a coil (9a, 9b) arranged underneath the furnace bottom (4) and through which flows a direct current, preferably the furnace current, and the coil area of which approximately corresponds to the area of the bottom electrode, the ampere-turns number being such that the downwardly directed bath agitation in the melt (6), produced solely by the current flow in the melt (6) underneath the electrode (5), is reversed in the region near to the bottom underneath the electrode (5) into the opposite direction by the magnetic field of said coil (9a, 9b).

2. Method according to Claim 1, characterized in that the coil (9a, 9b) is dimensioned such that the ampere-turns number amounts to at least twice the furnace current.

3. Method according to Claim 1 or 2, characterized in that the magnetic field is generated by two individual coils (9a, 9b) which are magnetically connected in parallel and through each of which half the furnace current flows.

## Revendications

1. Méthode d'emploi d'un four à arc à courant continu comprenant au moins une électrode (5) branchée comme cathode et au moins une électrode de base (3) branchée comme anode, caractérisée par le fait que la soudure est soumise à un champ magnétique, lequel est généré par une bobine (9a, 9b) disposée sous le fond du four (4), traversée par du courant continu, de préférence par le courant du four, dont la surface de bobine correspond approximativement à la surface de l'électrode de base, le nombre d'ampères-tours étant déterminé de telle façon que le mouvement du bain généré par le courant passant dans la soudure (6) sous l'électrode (5) seule et orienté vers le bas soit dirigé en sens inverse dans la soudure (6) par le champ magnétique de ladite bobine (9a, 9b) dans la zone se trouvant à proximité du fond sous l'électrode (5).

2. Méthode conforme à la revendication 1, caractérisée par le fait que la bobine (9a, 9b) présente des dimensions telles que le nombre d'ampères-tours est au moins égal au double du courant du four.

3. Méthode conforme à la revendication 1 ou 2, caractérisée par le fait que le champ magnétique est généré par deux bobines individuelles (9a, 9b) branchées magnétiquement en parallèle, celles-ci étant chacune traversées par la moitié du courant du four.
